(19) Europäisches Patentamt
European Patent Office
Office européen des brevets

(11) **EP 4 711 803 A1**

(12) **EUROPEAN PATENT APPLICATION**

(43) Date of publication:
**18.03.2026 Bulletin 2026/12**

(21) Application number: **24306485.4**

(22) Date of filing: **11.09.2024**

(51) International Patent Classification (IPC):
**G01S 7/02** *(2006.01)*    **G01S 7/40** *(2006.01)*
**G01S 13/34** *(2006.01)*    **G01S 13/931** *(2020.01)*

(52) Cooperative Patent Classification (CPC):
**G01S 7/4021; G01S 7/023; G01S 13/343;
G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Rifai, Ayoub**
**5656AG Eindhoven (NL)**

• **Mesnard, Thierry**
**31023 Toulouse (FR)**
• **Hajji, Zahran**
**5656AG Eindhoven (NL)**
• **Acri, Giuseppe**
**31023 Toulouse (FR)**

(74) Representative: **Hardingham, Christopher Mark
NXP Semiconductors
Intellectual Property Group
The Cattle Barn
Upper Ashfield Farm, Hoe Lane
Romsey, Hampshire SO51 9NJ (GB)**

(54) **RADAR SYSTEM AND TESTING METHOD WITH INTERFERENCE DETECTION**

(57)    The present disclosure relates to a radar system and related method, where the radar system includes test circuitry and a controller. The controller causes the test circuitry to inject a first pair of test tones having first test tone frequencies and first test tone magnitudes into first and second receiver modules, receive a first and second output signals from the first and second receiver modules, respectively, detect interference based on the first pair of test tones and the first and second output signals, modify, in response to detecting the interference, the first test tone frequencies to produce second test tone frequencies, cause, in response to detecting the interference, the test circuitry to inject a second pair of test tones having the second test tone frequencies into the first receiver module and the second receiver module.

FIG. 4

**Description**

TECHNICAL FIELD

Embodiments of the subject matter described herein relate generally to radar systems, such as automotive radar systems, including integrity testing processes for such radar systems.

BACKGROUND

Automotive radar solutions for advanced driver assistance systems (ADAS) are currently being deployed on a large scale, and are typically implemented as long-range radar (LRR) applications or short-range radar (SRR) applications. Both of these applications typically use frequency modulated continuous wave (FMCW) modulation techniques in order to be able to identify objects in the vicinity of the radar system, such as a vehicle or a pedestrian. Such radar systems typically utilize millimeter wave (mmWave) frequencies for transmission and reception of radar signals.

Automotive radar systems and associated signals are susceptible to interference, as may come from other automotive radar systems or other sources. This interference can pose challenges when attempting to accurately and adequately process received radar signal reflections. For example, as the use of automotive radar systems increases, the chance of experiencing radar-to-radar interference on the road escalates, which can degrade the detection automotive radar performance. When a radar system experiences interference due to signals from other radar systems, the detection performance of the radar system deteriorates. Such interference may also impact integrity testing processes of the radar system.

BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

FIG. 1 shows a radar system that may be configured to perform integrity testing with interference detection and avoidance as part of a built-in self-test (BIST), in accordance with various embodiments;
FIG. 2 shows an illustrative process flow for a method of operating a radar system, such as the radar system of FIG. 1, including BIST and reconfiguration processes, in accordance with various embodiments;
FIG. 3 shows an illustrative diagram illustrating test signal injection by BIST circuitry into two receiver modules of a radar system, such as the radar system of FIG. 1, as part of an integrity testing process with interference detection and avoidance, in accordance with various embodiments; and
FIG. 4 shows an illustrative process flow for a method of integrity testing with interference detection and avoidance that includes test signal injection into two or more receiver modules of a radar system, such as the radar system of FIG. 1, in accordance with various embodiments.

DETAILED DESCRIPTION

The following detailed description is merely illustrative in nature and is not intended to limit the embodiments described herein and uses of such embodiments. Furthermore, there is no intention to be bound by any expressed or implied theory presented in the preceding technical field, background, or the following detailed description.

For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Various embodiments described herein relate to radar systems, such as automotive radar systems, configured to perform a receiver module integrity testing process (e.g., as part of a built-in self-test (BIST) process) with interference detection and avoidance, where the radar system is configured to detect interfering signals (e.g., radar signals generated by other nearby radar systems) by injecting test tones into two or more receiver modules being tested and analyzing output signals generated by the receiver modules to determine whether interfering signals are present that non-negligibly affect the output signals. Upon detecting one or more interfering signals based on an interference level in the output signals that is outside of a threshold range, the radar system may be configured to "avoid" the interfering signal(s) by modifying the frequencies of injected test tones.

Conventional radar systems typically perform periodic self-testing to ensure that components of the transmit and receive chains are functioning properly. For example, such conventional radar systems typically determine receiver (RX)-to-RX phase difference and gain difference testing as part of this periodic integrity self-testing in order to ensure proper functionality and accuracy of the radar system. Such gain difference and phase difference tests are typically performed by injecting a single test tone into a mixer input of the active receive chains. However, such tests that perform test tone injection at the mixer input can omit certain portions of the receive chain, such as a low noise amplifier (LNA) at an input of the receive chain, and therefore do not verify the integrity of the entire receive chain.

Embodiments herein address these challenges by injecting test tones at the input of a low noise amplifier (LNA) of active receiver modules of the radar system as part of an integrity testing process (e.g., RX-to-RX gain difference testing), which may provide greater coverage of the receive chains of the radar system compared to conventional approaches in which single test signals are injected at mixer inputs. A possible drawback of performing test tone injection at the LNA is increased sensitivity to external interfering signals (e.g., from nearby external radar systems, such as radar systems of nearby vehicles), which can undesirably reduce the reliability of integrity testing results. To address this potential drawback, embodiments herein perform an interference detection and avoidance process as part of an integrity testing process, such as RX-to-RX gain difference testing, by injecting multiple (e.g., two) test tones having different magnitudes and frequencies into the LNAs of multiple active receiver modules being tested, and then comparing ratios (sometimes referred to herein as "test tone ratios") of the magnitudes of the injected test tones to ratios (sometimes referred to herein as "output tone ratios") of the magnitudes of the output signals provided at outputs of the receiver modules. If the determined test tone ratios and output tone ratios are significantly different (e.g., with a ratio of the test tone ratio to the output tone ratio exceeding or otherwise falling outside of a predetermined threshold range) for one or more of the receiver modules being tested, this may indicate a relatively high detected interference level attributable to at least one interfering signal at or around the test tone frequencies. In response to detecting an interfering signal based on the comparison of the test tone ratio and the output tone ratio, the test tones may be injected again with modified frequencies to attempt to avoid the interfering signal(s).

For example, in one or more embodiments of a RX-to-RX gain difference testing process, in an initial interference detection test, first and second test tones may be generated at initial magnitudes and frequencies, and a combination of the first and second test tones may be injected into respective inputs of LNAs of two or more receiver modules of the radar system (e.g., where the first and second test tones are injected simultaneously, sometimes represented herein as a sum of the first and second test tones). The first and second test tones may be generated and injected by BIST circuitry included in the radar system, in one or more embodiments. The expected output signal of each receiver module after injection of the first and second test tones may be a combination (e.g., sum) of first and second output tones. A controller of the radar system may determine, for each receiver module based on the respective output signals, whether a ratio of the magnitudes of the first and second test tones is significantly different from a ratio of the magnitudes of the first and second output tones output by that receiver module. In one or more embodiments, such magnitudes of the test tones and output tones may be peak voltage magnitudes. Such a determination may be performed by comparing the ratio (e.g., in decibels) of the test tone ratio to the output tone ratio to a predetermined threshold range. In one or more embodiments, if the output tone ratio is significantly different from the test tone ratio, indicating that an interfering signal may be affecting the output tones, then an additional interference detection test may be performed with a new pair of test tones being generated and injected at modified frequencies.

In one or more embodiments, if the output tone ratio and the test tone ratio are not significantly different (e.g., based on the comparison of these ratios to the predetermined threshold range), this indicates that an interfering signal is likely not present at or near either of the test tone frequencies. For improved accuracy and robustness of the interference detection and avoidance process, after an initial determination that no interfering signals are detected based on an initial test tone injection, the radar system may be configured to modify the test tone magnitudes, then perform an additional interference detection test in which test tone injection is performed using the modified test tone magnitudes. By repeating the interference detection test with different test tone magnitudes after an initial determination that no interfering signals are present in this way, the radar system may avoid the possibility of a "false negative" result during interference detection and avoidance process.

Upon determination (and, in one or more embodiments, confirmation through an additional interference detection test with different test tone magnitudes) by the radar system that no interfering signals affected the output signals generated by the receiver modules following test tone injection, the radar system may be configured to perform RX-to-RX gain difference determination. For example, the radar system may determine the gain mismatch between one or more pairs of receiver modules based on corresponding output signals generated by those receiver modules during the most recent interference detection test of the interference detection and avoidance process.

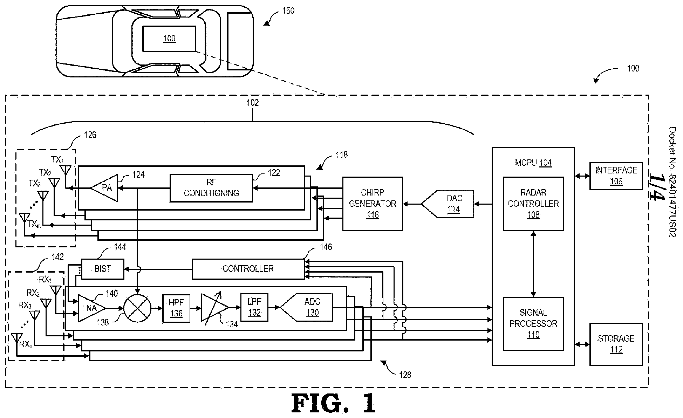

FIG. 1 shows an illustrative diagram of a radar system 100 which includes a radar device 102 (sometimes referred to herein as "radar communication circuitry 102" or "radar front-end circuitry 102") that is connected to a radar microcontroller and processing unit (MCPU) 104. The radar system 100 may include built-in self-test (BIST) circuitry 144 (sometimes referred to herein as "test circuitry 144") that is configured, by a controller 146, to perform an integrity testing process that includes an interference detection and avoidance process in which the BIST circuitry 144 injects test signals, which may include first and second test tones, into inputs of low noise amplifiers 140 of two or more receiver modules 128 as part of a periodic (e.g., per-cycle) integrity testing process. For example, the controller 146 may be configured to compare respective ratios of the magnitudes (e.g., peak voltages) of output tones ("output tone ratios") at outputs of the receiver modules 128 to a ratio of the magnitudes (e.g., peak voltages) of injected test tones ("test tone ratio") to determine whether an interfering signal is present and affecting the output tones. In accordance with various embodiments, the controller 146 may include, for example, any suitable controller, microcontroller, computer processing circuitry, computer processing platform, or the like, and may be implemented using hardware, software, or any suitable combination of hardware and software. In response to detecting that an interfering signal is affecting the output tones in this way, the controller 146 may modify the frequencies of the test tones in order to "avoid" the interfering signal. Embodiments of such integrity testing processes and interference detection and avoidance processes are described in more detail below.

In one or more embodiments, the radar system 100 may be a Multiple-Input Multiple-Output (MIMO) radar system, such as a Linear Frequency Modulation (LFM) MIMO radar system (e.g., an LFM automotive MIMO radar system). In one or more embodiments, the radar device 102 may include radar front-end hardware. In one or more embodiments, the radar device 102 may be embodied as a line-replaceable unit (LRU) or modular component that is designed to be replaced quickly at an operating location. Similarly, the radar MCPU 104 may be embodied as a line-replaceable unit (LRU) or modular component. Although a single or mono-static radar devices are shown, it will be appreciated that additional distributed radar devices may be used to form a distributed or multi-static radar. In addition, the depicted radar system 100 may be implemented in integrated circuit form with the radar device 102 and the radar MCPU 104 formed on separate integrated circuits (chips) or on a single chip, depending on the application. In accordance with various embodiments, the radar system 100 may be implemented as part of an automotive system in conjunction with an Advanced Driver Assistance System (ADAS) of a vehicle, such as a vehicle 150. It should be understood that components of the radar system 100 may be distributed at various locations on or within the vehicle 150 (e.g., with antennas located at one or more front, rear, or side panels of the vehicle 150, at front or rear bumpers of the vehicle 150, or at other suitable locations on the vehicle 150, or at a combination of such locations; with processing circuitry, transmitter modules, and receiver modules being disposed at one or more locations inside the vehicle 150).

The radar device 102 includes one or more transmitting antenna elements 126 (sometimes referred to herein as "transmit antennas 126") and receiving antenna elements 142 (sometimes referred to herein as "receive antennas 142") connected, respectively, to one or more radiofrequency (RF) transmitter (TX) modules 118 and receiver (RX) modules 128. Each transmit antenna 126 and TX module 118 may be associated with a respective transmit channel of a group of transmit channels designated herein as $TX_1$, $TX_2$, $TX_3$, ... $TX_m$, where "m" is the total number of transmit (TX) channels. Each receive antenna 142 and RX module 128 may be associated with a respective receive channel of a group of receive channels designated herein as $RX_1$, $RX_2$, $RX_3$, ... $RX_n$, where "n" is the number of receive (RX) channels. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and not limiting, with other quantities of these elements being possible in one or more other embodiments, such as four transmitter modules 118 and six receiver modules 128, or a single transmitter module 118 and/or a single receiver module 128. The radar device 102 includes a chirp generator 116, which is configured to supply chirp input signals to the transmitter modules 118. To this end, the chirp generator 116 is configured to receive input program and control signals, including, as non-limiting examples, a reference local oscillator (LO) signal, a chirp start trigger signal, and program control signals, from the MCPU 104 via a digital-to-analog converter (DAC) 114. The chirp generator 116 is configured to generate chirp signals and send the chirp signals to the transmitter modules 118 for transmission via the transmitting antenna elements 126. In one or more embodiments, each transmitter module 118 includes an RF conditioning module 122 that may be configured to filter the chirp signals. In one or more embodiments, the RF conditioning module 122 may include one or more frequency multipliers configured to increase the frequency of chirp signals output by the chirp generator 116. Each transmitter module 118 includes a power amplifier 124 configured to amplify the filtered chirp signal before they are provided to and transmitted via one or more corresponding transmitting antenna elements 126. Herein, a transmitted chirp signal is sometimes referred to as a "transmit signal".

The radar signal transmitted by the transmitter modules 118 and transmit antennas 126 may be reflected by an object in an environment of the radar device 102, and part of the reflected radar signal, sometimes referred to herein as a "return signal" or a "reflection", is received by the receiving antenna elements 142 at the radar device 102. In one or more embodiments, the reflected radar signal received via one of the receiving antenna elements 142 and a corresponding one of the receiver modules 128 corresponds to a chirp signal transmitted via one of the transmit antennas 126 and a corresponding transmitter module 118, and such a received radar signal may be referred to herein as a "chirp", "chirp signal", or "received chirp signal." Such a received chirp signal may include interference components attributable to one or more interference signals in the environment of the radar system 100. At each receiver module 128, the received (radio frequency) antenna signal is amplified by a low noise amplifier (LNA) 140 and then fed to a mixer 138 where it is mixed with the transmitted chirp signal generated by the RF conditioning module 122. The resulting intermediate frequency signal is fed to a high-pass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130 and is output by each receiver module 128 (e.g., output to the signal processor 110 of the MCPU 104) as a digital signal. In this way, the receiver modules 128 compress the echo of various delays into multiple sinusoidal tones whose frequencies correspond to the round-trip delay of the echo.

In the radar system 100, the radar MCPU 104 may be connected and configured to supply input control signals to the radar device 102 and to receive therefrom digital output signals generated by the receiver modules 128. In one or more embodiments, the radar MCPU 104 includes a radar controller 108 and a signal processor 110 (sometimes referred to herein as "signal processing circuitry 110"), either or both of which may be embodied as a microcontroller unit or other processing unit. The MCPU 104, the radar controller 108, and the signal processor 110 each include or are implemented by computer processing circuitry, in accordance with various embodiments. The radar controller 108 can receive data from the radar device 102 (e.g., from the receiver modules 128) and can control radar parameters of the radar device 102, such as frequency band, length of each radar frame, and the like via the DAC 114. For example, the DAC 114 may be used to adjust the radar chirp signals output from the chirp generator 116 included in the radar device 102. The signal processor 110 may be configured and arranged for signal processing tasks such as, but not limited to, object identification, interference mitigation, computation of the distance or range to a detected object, computation of the radial velocity of a detected object, and computation of the AoA of signals reflected by a detected object, and the like. Herein, the term "AoA" or "Angle-of-Arrival" refers to the angle of a reflected signal (e.g., a radar signal) incident on an antenna array. The signal processor 110 can provide calculated values associated with such computations to a storage 112 and/or to other systems via an interface 106.

The interface 106 can enable the MCPU 104 to communicate with other systems over local and wide area networks, the internet, automotive communication buses, and/or other kinds of wired or wireless communication systems, as non-limiting examples. In one or more embodiments, the MCPU 104 can provide the calculated values over the interface 106 to other systems, such as a radar-camera-lidar fusion system; an automated driving assistance system including parking, braking, or lane-change assistance features; or the like. The storage 112 can be used to store instructions for the MCPU 104, received data from the radar device 102, calculated values from the signal processor 110, and the like. Storage 112 can be any suitable storage medium, such as a volatile or non-volatile computer-readable memory.

To control the transmitter modules 118, the radar controller 108 may, for example, be configured to generate transmitter input signals, such as program, control trigger, reference local oscillator (LO) signal(s), calibration signals, and frequency spectrum shaping signals (such as ramp generation in the case of Frequency-Modulated Continuous Wave (FMCW) radar). The radar controller may, for example, be configured to receive data signals, sensor signals, and/or register programming or state machine signals for RF (radio frequency) circuit enablement sequences.

At each receiver module 128, digital output signals are generated (e.g., as ADC samples generated by the ADCs 130) from return signals (i.e., reflected radar signals received via the RX modules 128) for digital processing by the signal processor 110 to construct and accumulate multiple-input multiple-output (MIMO) array vector outputs forming a MIMO aperture for use in computing plots or maps for AoA estimation and object tracks. For example, upon receiving raw ADC samples from an ADC 130 of a receiver module 128, the signal processor 110 may perform one or more interference suppression processes (e.g., which may include one or more recursive thresholding processes as described herein) on the digital output signals before processing the resultant interference-suppressed ADC samples using one or more Fast Fourier Transform (FFT) modules or Discrete Fourier Transform (DFT) modules, such as a fast-time (range) FFT module and a slow-time (Doppler) FFT module. In one or more embodiments, processing of the interference-suppressed ADC samples by the fast-time FFT module generates a range chirp antenna cube (RCAC) and subsequent processing of the RCAC by the slow-time (Doppler) FFT module generates a range-Doppler antenna cube (RDAC) (e.g., including range-Doppler response maps for each RX antenna). The signal processor 110 may then perform Constant False Alarm Rate (CFAR) detection on the range-Doppler antenna cube to detect peaks in the RDAC. The signal processor 110 may further process the RDAC based on the detected peaks to construct a MIMO array vector which the signal processor 110 then processes to perform AoA estimation and object tracking. The MCPU 104 may then output the resulting object tracks (e.g., via the interface 106) to other automotive computing or user interfacing devices for further processing or display.

The controller 146 may include inputs coupled to the outputs of two or more ADCs 130 of two or more of the receiver modules 128. The BIST circuitry 144 may include at least one input coupled to at least one output of the controller 146 and may include outputs coupled to two or more LNAs 140 of the two or more receiver modules 128. The BIST circuitry 144 may include any suitable combination of controller circuitry, digital-to-analog converter (DAC) circuitry, frequency multiplier circuitry, signal filtering circuitry, amplifier circuitry, phase rotation circuitry, low drop out (LDO) voltage regulator circuitry, or other circuitry suitable for generating test signals (e.g., "test tones") at various selectable magnitudes (e.g., peak voltages) and frequencies. The magnitude and frequency of a given test tone generated by the BIST circuitry 144 may be programmatically selected, may be selected based on control signals received from the controller 146, or may be programmatically selected based on the control signals received from the controller 146, in accordance with various embodiments.

For example, during each radar cycle, the BIST circuitry 144 may be configured to generate and provide (e.g., inject) first and second test tones to inputs of the two or more LNAs 140 as part of an integrity testing process, such as an RX-to-RX gain difference testing process, where each of the first and second test tones may be generated by the BIST circuitry 144 at respectively different frequencies and magnitudes. In one or more embodiments, the frequencies and magnitudes of the test tones injected by the BIST circuitry 144 may be selected based on control signals provided by the controller 146. In one or more embodiments, the frequencies and magnitudes of first and second test tones initially injected by the BIST circuitry 144 may be based on predefined initial frequency values and magnitude values for an initial interference detection test. In one or more embodiments frequencies and magnitudes of the test tones subsequently injected by the BIST circuitry 144 during later steps of the same interference detection and avoidance process may be modified based on output tones provided at outputs of the two or more receiver modules 128, as described in more detail below.

In one or more embodiments, the controller 146 and the BIST circuitry 144 may be configured to perform one or more integrity testing processes, such as RX-to-RX gain difference testing or RX-to-RX phase difference testing. To verify the validity of one or more of such integrity testing processes, the controller 146 may be configured to detect whether external interfering signals are significantly affecting the output tones generated in response to the test tones injected across multiple interference detection tests. For example, the BIST circuitry 144 may be configured to inject a first pair of test tones with initial frequencies and magnitudes at inputs of the LNAs 140 of two or more of the receiver modules 128. The controller 146 may receive ADC samples from the ADCs 130 representing output signals at the end of the receive chain of the receiver modules 128 (e.g., representing the signals provided at the inputs of the ADCs 130, in the present example). The controller 146 may be configured to determine, based on the received ADC samples, whether the output signals generated by the receiver modules 128 based on to the injected pair of test tones are significantly affected by interfering signals (e.g., external signals transmitted by other nearby radar systems). For example, the controller 146 may be configured to determine the level of interference from such interfering signals by comparing a ratio of magnitudes of the first and second tones (a "test tone ratio") to a ratio of magnitudes of two tones of each output signal ("output tone ratios"), where each output signal is expected to include two tones.

In response to determining, based on a comparison of the test tone ratio and the output tone ratio, that the level of interference present in the output signals is outside of a predetermined threshold range, the controller 146 may attempt to avoid the interfering signal(s) by configuring the BIST circuitry 144 to modify the frequencies of the test tones (i.e., "test tone frequencies"). The controller 146 may then cause the BIST circuitry 144 to perform an additional interference detection test in which the BIST circuitry 144 injects another pair of test tones at the modified test tone frequencies, and the controller 146 compares the test tone ratio to the output tone ratio determined during the additional interference detection test to assess the interference level. In one or more embodiments, the controller 146 may continue to modify the test tone frequencies and perform additional interference detection tests in which pairs of test tones are injected at the modified test tone frequencies until the controller 146 determines that the level of interference is within the predetermined threshold range or until a predetermined time limit has elapsed.

In response to determining, based on a comparison of the test tone ratio and the output tone ratio determined during a given interference detection test, that the level of interference present in the output signals is sufficiently low (e.g., based on a threshold comparison, explained in more detail below), the controller 146 and BIST circuitry 144 may proceed with subsequent steps of the integrity testing process being performed (e.g., determining gain mismatch between pairs of receiver modules, in the case of RX-to-RX gain difference testing). In this way, the controller 146 and the BIST circuitry 144 may mitigate the impact of interfering signals on such integrity testing processes performed by the BIST circuitry 144.

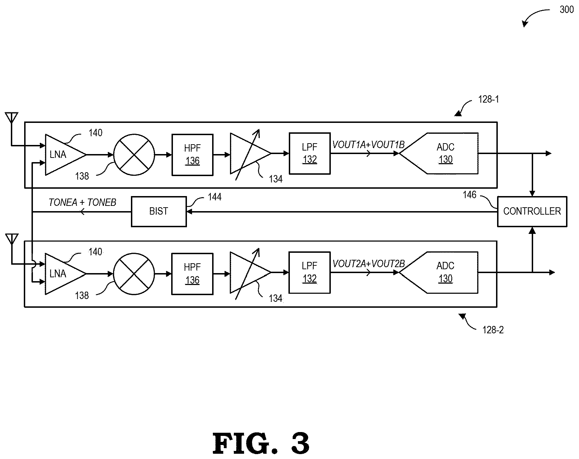

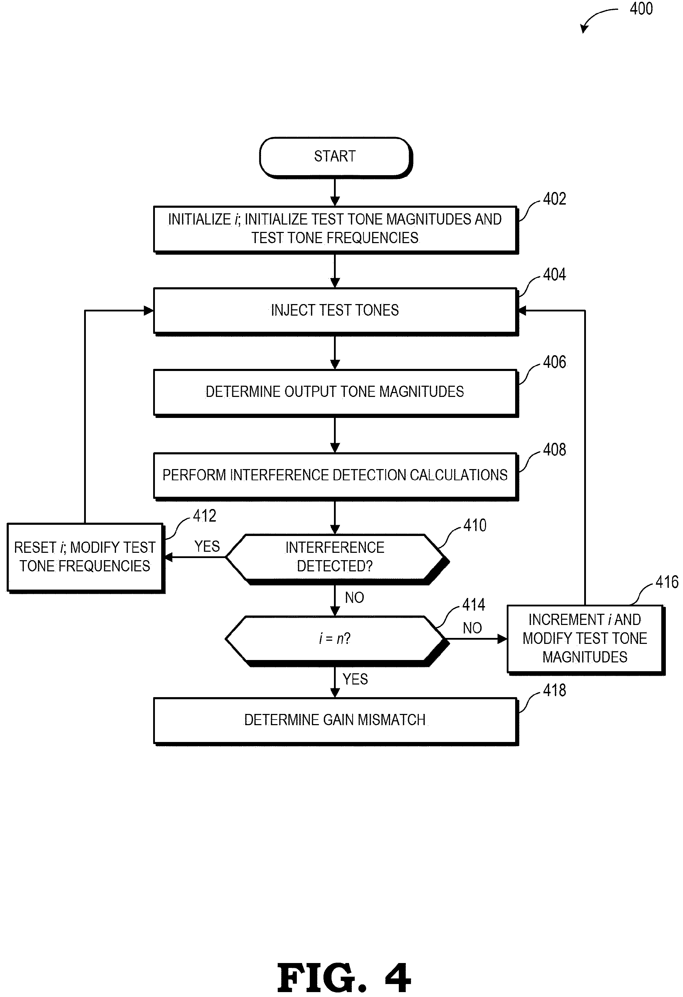

In one or more embodiments, in response to an initial determination by the controller 146 that the interference level of the output signals is within the predetermined threshold range based on a comparison of the test tone ratio and the output tone ratio determined during a given interference detection test, the controller 146 may be configured to cause the BIST circuitry 144 to modify the magnitudes of the test tones ("test tone magnitudes"). The controller 146 may then cause the BIST circuitry 144 to perform an additional interference detection test in which the BIST circuitry 144 injects another pair of test tones at the modified test tone magnitudes, and the controller 146 compares the corresponding test tone ratio to the resultant output tone ratio determined during the additional interference detection test to assess the interference level. By repeating the test tone injection and interference detection test using different test tone magnitudes after an initial determination that interfering signals did not significantly impact the output tones, the likelihood of a false negative result of the interference detection test may be advantageously reduced, thereby improving the accuracy and robustness of the interference detection and avoidance process. Example embodiments of interference detection and avoidance processes that may be performed by the radar system 100 or other suitable radar systems (e.g., as part of an integrity testing process or other BIST processes) are described in more detail below in connection with FIGS. 3 and 4.

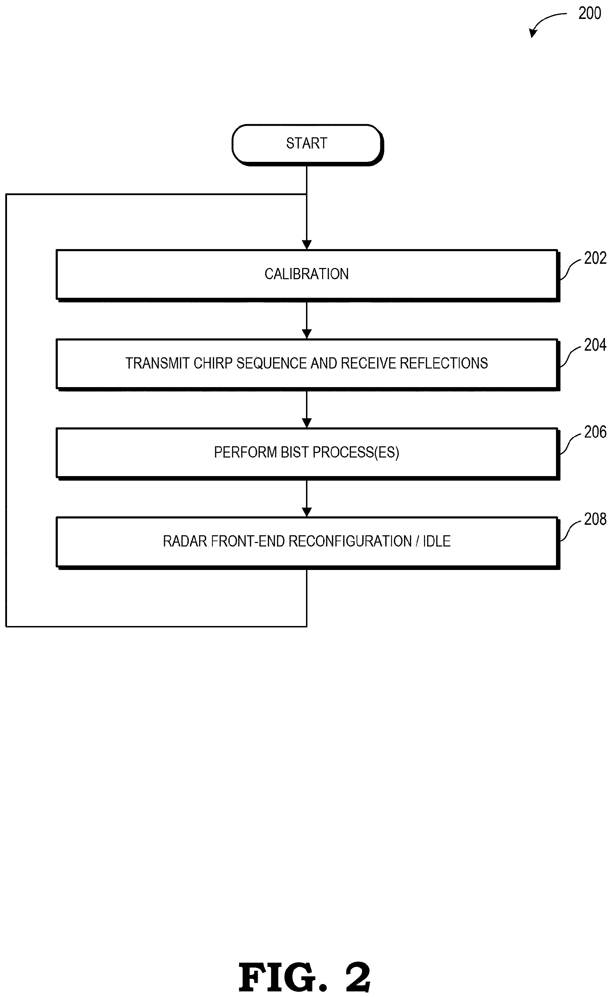

FIG. 2 shows an illustrative process flow for a method 200 illustrating a radar front-end (RFE) radar cycle that includes the performance of one or more BIST processes, which may include one or more integrity testing processes, such as RX-to-RX gain difference testing. The integrity testing processes may include an interference detection and avoidance process (e.g., an embodiment of the method 400 of FIG. 4, as a non-limiting example). The method 200 may be performed using RFE circuitry of a radar system (e.g., the radar front end circuitry 102 of the radar system 100 of FIG. 1), which may include BIST circuitry (e.g., the BIST circuitry 144 of FIG. 1) and a controller (e.g., the controller 146 of FIG. 1) in accordance with one or more embodiments. The method 200 is described with reference to elements of the radar system 100 of FIG. 1. However, it should be understood that this is illustrative and not limiting, at least in that other suitable radar systems may be used to carry out the method 200 in one or more other embodiments.

At block 202, the radar front-end circuitry 102 performs a calibration process (e.g., which may include phase calibration, frequency calibration, gain calibration or other suitable calibration processes).

At block 204, the radar front-end circuitry 102 transmits a chirp sequence (e.g., a sequence of radar chirp signals) via the transmitter modules 118 and the transmit antennas 126 and receives reflections of the transmitted chirps via the receiver modules 128 and the receive antennas 142. The reflections of the transmitted chirps may be reflected by one or more objects in an environment of the radar system 100. Such reflections are sometimes referred to as "reflected radar signals" herein.

At block 206, after the sequence of chirps has been transmitted by the transmitter modules 118 and the transmit antennas 126 and corresponding reflections have been received by the receiver modules 128 and the receive antennas 142, the radar front-end circuitry 102 performs one or more BIST processes. Such BIST processes may include one or more integrity testing processes such as RX-to-RX gain difference testing or RX-to-RX phase difference testing between two or more receiver modules of the receiver modules 128.

In one or more embodiments, the radar front-end circuitry 102 may be configured to perform one or more interference detection and avoidance processes (e.g., corresponding to an embodiment of the method 400 of FIG. 4, as a non-limiting example) prior to performing RX-to-RX gain difference testing between two or more receiver modules of the receiver modules 128 at block 206. As part of the interference detection and avoidance process, the radar front-end circuitry 102 may inject a pairs of test tones into the two or more receiver modules 128 at varying magnitudes, frequencies, or both, and may compare injected test tone ratios to output tone ratios for each receiver module being tested in order to determine whether external interfering radar signals are significantly affecting the output signals (and would, therefore, likely undesirably impact the results of gain mismatch determination between receiver modules), as explained in more detail in the examples of FIG. 3 and 4, below.

In one or more embodiments, upon completion of the interference detection and avoidance process, the radar front-end circuitry may be configured to perform gain mismatch calculations as part of RX-to-RX gain difference testing between two or more pairs of the receiver modules 128 being tested, where such calculations may be performed based on the output tones generated by those receiver modules in the most recent interference detection test (that is, the interference detection test at which the controller 146 determined that the output tones are not significantly affected by interfering signals). By performing the interference detection and avoidance process as part of the RX-to-RX gain difference testing process in this way, interfering signals may be avoided, such that negative impacts on the accuracy and reliability of the RX-to-RX gain difference testing caused by such interfering signals may be prevented or mitigated, advantageously.

At block 208, the radar front-end circuitry 102 may be reconfigured or may remain idle until the method 200 returns to block 202 (e.g., at which recalibration of the radar front-end circuitry may be performed).

FIG. 3 shows an illustrative block diagram 300 representing tone injection that may be performed as part of an integrity testing process. The diagram 300 is described here with reference to elements of the radar system 100 of FIG. 1, with like reference numerals used here to denote like elements. However, it should be understood that this is illustrative and not limiting, at least in that other suitable radar systems may be used to carry out the test signal (e.g., "test tone") injection process illustrated in the diagram 300 and one or more related integrity testing processes (e.g., RX-to-RX gain difference testing), in one or more other embodiments.

The diagram 300 shows a first receiver module 128-1 and a second receiver module 128-2, which may be included in the receiver modules 128 of the radar system of FIG. 1, in one or more embodiments. The BIST circuitry 144 and the controller circuitry 146 may be configured to carry out an interference detection and avoidance process prior to performance of RX-to-RX gain difference testing.

Using a conventional approach to RX-to-RX gain difference testing, the gain mismatch between first and second receiver modules would be calculated according to Equation 1:

$$GainMM_{12} = 20 * \log_{10} \frac{VOUT1/VIN1}{VOUT2/VIN2}\bigg|_{VIN1=VIN2} = 20 * \log_{10} \left(\frac{VOUT1}{VOUT2}\right) \quad (EQ.1),$$

where $GainMM_{12}$ is the gain mismatch between the first and second receiver modules, $VIN1$ is the magnitude (e.g., peak voltage) of the signal input to the LNA of the first receiver module, $VIN2$ is the magnitude (e.g., peak voltage) of the signal input to the LNA of the second receiver module, $VOUT1$ is the magnitude (e.g., peak voltage) of the signal output by the first receiver module given the input signal $VIN1,$ and $VOUT2$ is the magnitude (e.g., peak voltage) of the signal output by the second receiver module given the input signal $VIN2.$ Given $VIN1 = VIN2,$ meaning that the input signals are equal in magnitude, the gain mismatch can be calculated based on the ratio of the first and second output signal magnitudes $VOUT1$ and $VOUT2.$

However, in the presence of significant interfering signals, this calculation no longer accurately reflects the gain mismatch between the receiver modules, as shown in Equation 2:

$$GainMM_{12} = 20 * \log_{10} \left(\frac{Gain_1}{Gain_2}\right) = 20 * \log_{10} \left(\frac{VOUT1/(VIN1 + interf1)}{VOUT2/(VIN2 + interf2)}\right)$$

$$\neq 20 * \log_{10} \left(\frac{VOUT1}{VOUT2}\right) \quad (EQ.2),$$

where $interf1$ represents the magnitude of an interfering signal received at the first receiver module, and $interf2$ represents the magnitude of an interfering signal received at the second receiver module. Generally, in the presence of external interfering signals, $interf1$ is not equal to $interf2$, such that $VIN1 + interf1$ is not equal to $VIN2 + interf2.$ As shown in Equation 2, the contribution of interfering signals causes the result of the gain mismatch calculation to not accurately reflect the actual gain mismatch between the first and second receiver modules, which is undesirable.

In accordance with embodiments herein, such interference from external interfering signals that would likely impact RX-to-RX gain difference testing may be mitigated or avoided by injecting a pair of test tones, rather than a single test tone, in order to detect interference in the output signals, and by modifying the frequencies of the injected test tones (e.g., $VIN1$, $VIN2$ in Equations 1 and 2) to be further offset from the frequencies of interfering signals when interference is detected. For example, the BIST circuitry 144 and the controller 146 may carry out an interference detection and avoidance process to mitigate the impact of interfering signals on, for example, RX-to-RX gain difference testing. In one or more embodiments, to carry out the interference detection and avoidance process, the BIST circuitry 144 and the controller 146 may be configured to perform multiple interference detection tests. When performing an interference detection test, the BIST circuitry may inject a pair of test tones, *TONEA* and *TONEB,* into inputs of LNAs 140 of each receiver module being tested (the receiver modules 128-1 and 128-2 in the present example). The BIST circuitry 144 may be configured to inject each pair of test tones simultaneously, such that the combined signal injected into each of the LNAs 140 is given as *TONEA + TONEB.* Each of the receiver modules 128-1 and 128-2 may process the injected signal, *TONEA + TONEB,* using the various elements of the receiver chain (e.g., the LNA 140, the mixer 138, the HPF 136, the variable gain amplifier 134, and the LPF 132, as non-limiting examples) to produce an output signal. Each output signal generated by one of the receiver modules based on the injected test tones may be expected to include a pair of output tones, *VOUTA* and *VOUTB,* which are received at an input of the ADC 130. Here, the output tones generated by the receiver module 128-1 are given as *VOUT1A* and *VOUT1B,* and the output signal is given as *VOUT1A + VOUT1B.* Here, the output tones generated by the receiver module 128-2 are given as *VOUT2A* and *VOUT2B,* and the output signal is given as *VOUT2A + VOUT2B.*

Without being affected by external signals, the test tone ratio is expected to be equal to the output tone ratios of the output tones of each of the receiver module 128-1 and the receiver module 128-2, as shown in Equation 3:

$$\frac{TONEA}{TONEB} = \frac{VOUT1A}{VOUT1B} = \frac{VOUT2A}{VOUT2B} \qquad (EQ.3).$$

However, an interfering signal with a frequency similar to that of either or both of the test tones may affect the magnitudes of the output tones. An example of how interference may affect the output tone ratio at the output of the receiver module 128-1 is shown in Equation 4:

$$\frac{TONEA}{TONEB} \neq \frac{VOUT1A + interf}{VOUT1B + interf} \qquad (EQ.4),$$

where *VOUT1A* and *VOUT1B* are the expected output tones and *interf* is an interference component attributable to one or more interfering signals that is received at the antenna of the receiver module 128-1. During each interference detection test, the controller 146 of a given receiver module may be configured to perform an interference detection calculation to determine the interference level for a particular pair of output tones *VOUTA* and *VOUTB,* which may include interference components, given a pair of injected test tones, *TONEA* and *TONEB.* In one or more embodiments, the controller 146 may receive ADC samples from the ADC 130 and may determine the output tone magnitudes based on the received ADC samples. The controller 146 may then perform an interference detection calculation to determine whether significant interference has affected the output tones by comparing a logarithmic ratio of the test tone ratio *TONEA/TONEB* to the output tone ratio *VOUTA/VOUTB* the according to Equation 5:

$$TH1\,dB > 20 * log_{10}\left(\frac{TONEA/TONEB}{VOUTA/VOUTB}\right) > TH2\,dB \qquad (EQ.5).$$

In the example of Equation 5, sometimes referred to herein as an "interference detection calculation" the ratio of the test tone ratio to the output tone ratio is converted to decibels (dB) and the result is compared to a predetermined threshold range of between *TH1* dB and *TH2* dB, where *TH1* represents an upper threshold of the predetermined threshold range and *TH2* represents a lower threshold of the predetermined threshold range. In one or more embodiments, *TH1* = 1 dB and *TH2* = -1 dB, although this should be understood to be an illustrative and non-limiting example, such that other suitable upper and lower threshold values may be used to implement the predetermined threshold range in accordance with one or more other embodiments.

In one or more embodiments, if the determined ratio of the test tone ratio to the output tone ratio is within the predetermined threshold range (between 1 dB and -1 dB in one or more embodiments), the difference between the test tone ratio and the output tone ratio is relatively small, such that the interference level is considered to be relatively low or "non-significant". That is, given such a condition, no interfering signals are considered to significantly affect the output tones.

If the determined ratio of the test tone ratio to the output tone ratio is outside of the predetermined threshold range (greater than 1 dB or less than -1 dB in one or more embodiments), the difference between the test tone ratio and the output tone ratio is relatively large, such that the interference level is considered to be relatively high or "significant". That is, given such a condition, one or more interfering signals is considered to significantly affect the output tones.

In one or more embodiments, at the start of an interference detection and avoidance process, an initial interference detection test is performed in which the BIST circuitry 144 may be configured to inject a first pair of test tones into the LNAs 140 of the receiver modules 128-1 and 128-2. For example, the BIST circuitry 144 may output a first test tone (e.g., *TONEA*) of the first pair of test tones at a first frequency and a first magnitude (e.g., peak voltage). The BIST circuitry 144 may output a second test tone (e.g., *TONEB*) of the first pair of test tones at a second frequency and a second magnitude (e.g., peak voltage) that are different from the first frequency and the first magnitude. The injected first pair of test tones may be processed by the receive chain of each of the receiver modules 128-1 and 128-2 (e.g., where the receive chain includes the LNA 140, the mixer 138, the HPF 136, the variable gain amplifier 134, and the LPF 132, as a non-limiting example), resulting in a first output signal that includes a first pair of output tones (e.g., *VOUT1A+VOUT1B*) output by the receiver module 128-1 and a second output signal that includes a second pair of output tones (e.g., *VOUT2A+VOUT2B*) output by the receiver module 128-2. The ADC 130 of each of the receiver modules 128-1 and 128-2 may receive the respective output signals, perform analog-to-digital conversion of the output signals, and provide the converted output signals to the controller 146 (e.g., as ADC samples).

For each of the first and second output signals, the controller 146 may determine the magnitudes of the pair of output tones thereof based on the corresponding ADC samples, and may then perform respective interference detection calculations. For example, the controller 146 may perform the interference detection calculation according to Equation 5 using the test tone ratio of the first pair of test tones and the output tone ratio of the first pair of output tones to perform the interference detection calculation for the first output signal. The controller 146 may perform the interference detection calculation according to Equation 5 using the test tone ratio of the first pair of test tones and the output tone ratio of the second pair of output tones to perform the interference detection calculation for the second output signal.

In response to determining that the ratio of the test tone ratio to the output tone ratio is outside of the predetermined threshold range for either of the first and second output signals, indicating that interference is detected, the controller 146 may be configured to modify the test tone frequencies (e.g., increasing or decreasing the test tone frequencies by a predetermined amount, as described above). The controller 146 and the BIST circuitry 144 may then perform an additional interference detection test in which the BIST circuitry 144 injects a second pair of test tones, which are characterized by the modified test tone frequencies, and may perform interference detection calculations (e.g., according to Equation 5) based on the test tone ratio of the second pair of test tones and the output tone ratio of the resultant output signals produced at the first and second receiver modules 128-1 and 128-2 in response to injection of the second pair of test tones. Each time interference is detected as the result of an interference detection test, the controller 146 and the BIST circuitry 144 may be configured to perform an additional interference detection test in this way, with additional modification to the test tone frequencies. Such configuration may result in the controller 146 and the BIST circuitry 144 repeatedly modifying test tone frequencies and performing interference detection tests at the modified test tone frequencies until interference is not detected in either output signal as a result of the interference detection calculations or until a predetermined amount of time has elapsed.

In one or more embodiments, the controller 146 may be configured to require that no interference is detected in two consecutive interference detection tests, each using different test tone magnitudes, before gain mismatch detection is performed. Such a requirement may advantageously reduce the likelihood of a "false negative" result from a single interference detection test compromising the accuracy and reliability of subsequently performed integrity testing process steps (e.g., RX-to-RX gain difference testing process steps, such as gain mismatch calculation). For example, in response to determining that the ratio of the test tone ratio to the output tone ratio is within the predetermined threshold range for both of the output signals during a given interference detection test, indicating that interference is not detected, and further in response to determining that interference was detected in an interference detection test immediately preceding the given interference detection test, the controller 146 may be configured to modify the test tone magnitudes (e.g., increasing or decreasing the test tone magnitudes by a predetermined amount, such as by 10 dBm as a non-limiting example) while keeping the test tone frequencies the same frequencies at which interference was not detected. The controller 146 and the BIST circuitry 144 may then perform an additional interference detection test in which the BIST circuitry 144 injects an additional pair of test tones at the modified test tone magnitudes (but the same test tone frequencies) and may perform interference detection calculations (e.g., according to Equation 5) based on the test tone ratio of the additional pair of test tones and the output tone ratio of the resultant output signals produced at the first and second receiver modules 128-1 and 128-2 in response to injection of the additional pair of test tones.

In response to determining that interference is detected as a result of the additional interference detection test, the controller 146 and the BIST circuitry 144 may modify the test tone frequencies again and perform additional interference detection tests, as described above. In response to determining that interference is not detected as a result of the additional interference detection test, the controller 146 and the BIST circuitry 144 may stop interference detection testing and the controller 146 may continue with the RX-to-RX gain difference testing by determining the gain mismatch between the first and second receiver modules 128-1 and 128-2 based on the output signals from the additional interference detection test (i.e., the output signals from the most recent interference detection test). The gain mismatch calculation may be performed by the controller 146 according to Equation 1, above, in one or more embodiments.

An example of an integrity testing process that may include an interference detection and avoidance process, such as that as described in the present example, is shown in FIG. 4.

FIG. 4 shows an illustrative process flow for a method 400 by which a circuitry of a radar system (e.g., the BIST circuitry 144 and the controller 146 of the radar system 100 of FIGS. 1 and 3) may perform RX-to-RX gain difference testing that includes an interference detection and avoidance process in accordance with embodiments herein. In one or more embodiments, the method 400 may be performed as part of a BIST process (e.g., block 206 of the method 200 of FIG. 2, as a non-limiting example) that is performed once per radar cycle. The method 400 is described here with reference to elements of the radar system 100 of FIG. 1. However, it should be understood that this is illustrative and not limiting, at least in that other suitable radar systems may be used to carry out the method 400 in one or more other embodiments.

At block 402, the controller 146 initializes a variable $i$ and initializes test tone magnitudes and test tone frequencies. In the present example, the variable $i$ is initialized to a value of 0. As a non-limiting example, the controller 146 may initialize a first test tone frequency at a first frequency value of between 76 GHz and 77 GHz and may initialize a second test tone frequency at a second frequency value of between 76 GHz and 77 GHz, where the first frequency value is offset from the second frequency value by a frequency difference in a range of about 100 kHz to about 20 MHz. As a non-limiting example, the controller may initialize a first test tone magnitude at a first magnitude value of 0 dBm and may initialize a second test tone magnitude at a second magnitude value of 10 dBm.

Herein, the "test tone frequency" for a particular test tone refers to the center frequency of that test tone. In one or more embodiments, modifying the test tone frequencies may include increasing or decreasing each test tone frequency by a predetermined amount, which may be between 100 kHz and 20 MHz (e.g., 1 MHz, as a non-limiting example), although it should be understood that the predetermined amount could be a frequency outside of this range, in accordance with one or more other embodiments. In one or more embodiments, initial and modified frequencies of the test tones injected by the BIST circuitry 144 may be between 76 GHz and 77 GHz, as a non-limiting example.

At block 404, the controller 146 causes the BIST circuitry 144 to inject test tones at the defined test tone magnitudes and test tone frequencies into at least two receiver modules of the receiver modules 128. Each receiver module 128 being tested may receive a simultaneously injected pair of test tones from the BIST circuitry 144 at, for example, an input of the LNA 140 of that receiver module. During a first iteration, corresponding to an initial interference detection test, the defined test tone magnitudes and test tone frequencies correspond to the initial test tone magnitudes and test tone frequencies defined at block 402. During subsequent iterations, corresponding to additional interference detection tests performed subsequent to the initial interference detection test, the defined test tone magnitudes or test tone frequencies may differ from the initial test tone magnitudes or test tone frequencies due to modification of the test tone frequencies at block 412 or modification of the test tone magnitudes at block 416, as described below.

At block 406, the controller 146 determines output tone magnitudes of pairs of output tones included in output signals produced by each receiver module being tested, where the receiver modules generate the output signals in response to the injected test tones. For example, the controller 146 may receive digital representations (e.g., ADC samples) of output signals produced by the receiver modules, where each output signal is expected to include two (e.g., a pair of) output tones, which may be mixed or otherwise combined.

At block 408, the controller 146 performs, for each receiver module being tested, an interference detection calculation based on a ratio of the test tone ratio to the output tone ratio for that receiver module. For example, the test tone ratio may be given as the magnitude of a first injected test tone (e.g., $TONEA$) divided by a magnitude of a second injected test tone (e.g., $TONEB$). The output tone ratio may be given as the magnitude of a first output tone of the output signal produced by the receiver module divided by the magnitude of a second output tone of that output signal. In one or more embodiments, the interference detection calculation for a given receiver module may be performed by the controller 146 as a comparison of the ratio of the test tone ratio to the output tone ratio for the given receiver module, in decibels, to a predetermined threshold range. In one or more embodiments, the interference detection calculation may be performed by the controller 146 according to Equation 5, above.

The controller 146 may determine whether interference is detected based on the results of these interference calculations. For example, the controller 146 may determine that interference is detected by determining that the ratio of the test tone ratio to the output tone ratio for any of the receiver modules being tested is outside of the predetermined threshold range. For example, the controller 146 may determine that interference is not detected in response to determining that each ratio of the test tone ratio to the output tone ratio for each receiver module being tested is within the predetermined threshold range.

At block 410, if the controller 146 determines that interference is detected at block 408, then the method 400 proceeds to block 412. Otherwise, if the controller 146 determines that interference is not detected at block 408, the method 400 proceeds to block 414.

At block 412, in response to interference being detected at block 410, the controller 146 resets the value of $i$ (e.g., to be equal to zero) and modifies (e.g., increases or decreases by a predetermined frequency amount) the defined test tone frequencies to be used when injecting test tones during the next iteration of block 404. The method 400 then returns to block 404 to inject a pair of test tones (at the newly modified defined test tone frequencies) into the receiver modules being tested to begin an additional iteration of the interference detection test.

At block 414, in response to no interference being detected at block 410, the controller 146 determines whether $i = n$, where $n$ is a predetermined value used to track the number of sequential interference detection tests in which interference is not detected. In one or more embodiments in which $i$ is re-initialized to zero, $n$ may be equal to 1, such that two sequential interference tests in which interference is not detected are required to proceed to determining gain mismatch at block 418. Alternatively, $n$ may equal a number larger than 1, such that more than two sequential interference tests in which interference is not detected are required to proceed to determining gain mismatch at block 418.

If $i \neq n$, the method 400 proceeds to block 416. If $i = n$, the method 400 proceeds to block 418.

At block 416, in response to the controller 146 determining that $i \neq n$, the controller 146 increments $i$ by 1, and modifies (e.g., increases or decreases) one or both of the defined test tone magnitudes to be used when injecting test tones at block 404. The method 400 then returns to block 404 to inject a pair of test tones (at the newly modified defined test tone magnitudes and the candidate test tone frequencies) into the receiver modules being tested to begin an additional interference detection test. By modifying the test tone magnitudes in this way and performing one or more additional interference detection tests with the modified test tone magnitudes, the probability of a "false negative" determination of non-interference may be advantageously avoided.

At block 418, in response to the controller 146 determining that $i = n$, the controller 146 may determine that the current test tone frequencies are acceptable, and the controller 146 may determine the gain mismatch between the receiver modules by performing a gain mismatch calculation (e.g., according to Equation 1, above) based on the output signals of the receiver modules determined during the of the most recently performed interference detection test. In one or more embodiments, the controller 146 may cause the current test tone frequencies to be stored in memory at block 418.

Various exemplary embodiments are presented below. Some simplifications and omissions may be made in the following examples, which are intended to highlight and introduce some aspects of the various exemplary embodiments, without limiting the scope.

In one or more embodiments, a radar system includes a plurality of receiver modules, test circuitry configured to inject test tones into at least a first receiver module and a second receiver module of the plurality of receiver modules, and a controller that, to perform a testing process, is configured to cause the test circuitry to inject a first pair of test tones having first test tone frequencies and first test tone magnitudes into each of the first receiver module and the second receiver module, receive a first output signal from the first receiver module that is generated in response to the first pair of test tones, receive a second output signal from the second receiver module that is generated in response to the first pair of test tones, detect interference based on the first pair of test tones, the first output signal, and the second output signal, modify, in response to detecting the interference, the first test tone frequencies to produce second test tone frequencies, and cause, in response to detecting the interference, the test circuitry to inject a second pair of test tones having the second test tone frequencies into the first receiver module and the second receiver module.

In one or more embodiments, the first receiver module includes a first low noise amplifier (LNA), the second receiver module includes a second LNA, and test circuitry is configured to inject the test tones at an input of the first LNA and at an input of the second LNA.

In one or more embodiments, the first test tone magnitudes include a first magnitude of a first test tone of the first pair of test tones and a second magnitude a second test tone of the first pair of test tones, the first output signal includes a first output tone and a second output tone, the second output signal includes a third output tone and a fourth output tone, and the controller is configured to detect the interference based on the first test tone magnitudes and based on magnitudes of the first output tone, the second output tone, the third output tone, and the fourth output tone.

In one or more embodiments, the controller, to detect the interference, is configured to perform interference detection for the first receiver module by determining a first ratio of a second ratio of the first magnitude of the first test tone to the second magnitude of the second test tone, and a third ratio of the magnitudes of the first output tone and the second output tone, and comparing the first ratio to a predetermined threshold range. The controller, to detect the interference, is further configured to perform interference detection for the second receiver module by determining a fourth ratio of the second ratio of the first magnitude of the first test tone to the second magnitude of the second test tone, and a fifth ratio of the magnitudes of the third output tone and the fourth output tone, and comparing the fourth ratio to the predetermined threshold range. The controller, to detect the interference, is further configured to determine that either of the first ratio or the fourth ratio is outside of the predetermined threshold range.

In one or more embodiments, the controller is further configured to cause the test circuitry to inject a third pair of test tones having second test tone magnitudes into the first and second receiver modules, determine that interference at the first and second receiver modules is within a predetermined threshold range based on a third output signal generated by the first receiver module in response to the third pair of test tones and based on a fourth output signal generated by the second receiver module in response to the third pair of test tones, and in response to determining that interference at the first and second receiver modules is within the predetermined threshold range, cause the test circuitry to inject a fourth pair of test tones having third test tone magnitudes into the first and second receiver modules.

In one or more embodiments, the controller is further configured to, in response to determining that interference at the first and second receiver modules is within the predetermined threshold range based on output signals generated by the first and second receiver modules in response to the fourth pair of test tones, determining a gain mismatch between the first receiver module and the second receiver module.

In one or more embodiments, the testing process is performed once following transmission of a sequence of chirps during each radar cycle of a plurality of radar cycles of the radar system.

In an example embodiment, a method includes performing a testing process for a radar system by injecting, by test circuitry of the radar system, a first pair of test tones having first test tone frequencies and first test tone magnitudes into each of a first receiver module and a second receiver module of the radar system, receiving, by a controller of the radar system, a first output signal from the first receiver module that is generated in response to the first pair of test tones, receiving, by the controller, a second output signal from the second receiver module that is generated in response to the first pair of test tones, detecting, by the controller, interference based on the first pair of test tones, the first output signal, and the second output signal, modifying, by the controller in response to detecting the interference, the first test tone frequencies to produce second test tone frequencies, and injecting, by the test circuitry in response to the controller detecting the interference, a second pair of test tones having the second test tone frequencies into the first receiver module and the second receiver module.

In one or more embodiments, injecting the first pair of test tones includes injecting, by the test circuitry, the first pair of test tones into a first low noise amplifier (LNA) of the first receiver module, and injecting, by the test circuitry, the first pair of test tones into a second LNA of the second receiver module.

In one or more embodiments, the first test tone magnitudes include a first magnitude of a first test tone of the first pair of test tones and a second magnitude a second test tone of the first pair of test tones, the first output signal includes a first output tone and a second output tone, the second output signal includes a third output tone and a fourth output tone, and detecting the interference includes detecting, by the controller, the interference based on the first test tone magnitudes and based on magnitudes of the first output tone, the second output tone, the third output tone, and the fourth output tone.

In one or more embodiments, detecting the interference further includes performing interference detection for the first receiver module by determining, by the controller, a first ratio of a second ratio of the first magnitude of the first test tone to the second magnitude of the second test tone, and a third ratio of the magnitudes of the first output tone and the second output tone, and comparing, by the controller, the first ratio to a predetermined threshold range. Detecting the interference further includes performing interference detection for the second receiver module by determining, by the controller, a fourth ratio of the second ratio of the first magnitude of the first test tone to the second magnitude of the second test tone, and a fifth ratio of the magnitudes of the third output tone and the fourth output tone, and comparing, by the controller, the fourth ratio to the predetermined threshold range. Detecting the interference further includes determining, by the controller that either of the first ratio or the fourth ratio is outside of the predetermined threshold range.

In one or more embodiments, the method further includes injecting, by the test circuitry, a third pair of test tones having second test tone magnitudes into the first and second receiver modules, determining, by the controller, that interference at the first and second receiver modules is within a predetermined threshold range based on a third output signal generated by the first receiver module in response to the third pair of test tones and based on a fourth output signal generated by the second receiver module in response to the third pair of test tones, and injecting, by the test circuitry in response to determining that interference at the first and second receiver modules is within the predetermined threshold range, a fourth pair of test tones having third test tone magnitudes into the first and second receiver modules.

In one or more embodiments, the method further includes determining, by the controller in response to determining that interference at the first and second receiver modules is within the predetermined threshold range based on output signals generated by the first and second receiver modules in response to the fourth pair of test tones, a gain mismatch between the first receiver module and the second receiver module.

In one or more embodiments, the method further includes transmitting, by the radar system, a sequence of chirps during each radar cycle of a plurality of radar cycles, and performing the testing process once after transmitting the sequence of chirps in each radar cycle of a plurality of radar cycles.

In an example embodiment, radar front-end circuitry includes test circuitry configured to inject test tones into at least a first receiver module and a second receiver module, and a controller that, to perform a testing process, is configured to cause the test circuitry to inject a first pair of test tones having first test tone frequencies and first test tone magnitudes into each of the first receiver module and the second receiver module, receive a first output signal from the first receiver module that is generated in response to the first pair of test tones, receive a second output signal from the second receiver module that is generated in response to the first pair of test tones, detect interference based on the first pair of test tones, the first output signal, and the second output signal, modify, in response to detecting the interference, the first test tone frequencies to produce second test tone frequencies, and cause, in response to detecting the interference, the test circuitry to inject a second pair of test tones having the second test tone frequencies into the first receiver module and the second receiver module.

In one or more embodiments, the first receiver module includes a first low noise amplifier (LNA), the second receiver module includes a second LNA, and test circuitry is configured to inject the test tones at an input of the first LNA and an input of the second LNA.

In one or more embodiments, the first test tone magnitudes include a first magnitude of a first test tone of the first pair of test tones and a second magnitude a second test tone of the first pair of test tones, the first output signal includes a first output tone and a second output tone, the second output signal includes a third output tone and a fourth output tone, and the controller is configured to detect the interference based on the first test tone magnitudes and based on magnitudes of the first output tone, the second output tone, the third output tone, and the fourth output tone.

In one or more embodiments, the controller, to detect the interference, is configured to perform interference detection for the first receiver module by determining a first ratio of a second ratio of the first magnitude of the first test tone to the second magnitude of the second test tone, and a third ratio of the magnitudes of the first output tone and the second output tone, and comparing the first ratio to a predetermined threshold range. The controller, to detect the interference, is further configured to perform interference detection for the second receiver module by determining a fourth ratio of the second ratio of the first magnitude of the first test tone to the second magnitude of the second test tone, and a fifth ratio of the magnitudes of the third output tone and the fourth output tone, and comparing the fourth ratio to the predetermined threshold range. The controller, to detect the interference, is further configured to determine that either of the first ratio or the fourth ratio is outside of the predetermined threshold range.

In one or more embodiments, the controller is further configured to cause the test circuitry to inject a third pair of test tones having second test tone magnitudes into the first and second receiver modules, determine that interference at the first and second receiver modules is within a predetermined threshold range based on a third output signal generated by the first receiver module in response to the third pair of test tones and based on a fourth output signal generated by the second receiver module in response to the third pair of test tones, and in response to determining that interference at the first and second receiver modules is within the predetermined threshold range, cause the test circuitry to inject a fourth pair of test tones having third test tone magnitudes into the first and second receiver modules.

In one or more embodiments, the controller is further configured to, in response to determining that interference at the first and second receiver modules is within the predetermined threshold range based on output signals generated by the first and second receiver modules in response to the fourth pair of test tones, determine a gain mismatch between the first receiver module and the second receiver module.

Although the operations of the method(s) herein are shown and described in a particular order, the order of the operations of each method may be altered so that certain operations may be performed in an inverse order or so that certain operations may be performed, at least in part, concurrently with other operations. In one or more other embodiments, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limiting to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

While at least one exemplary embodiment has been presented in the foregoing detailed description, it should be appreciated that a vast number of variations exist. It should also be appreciated that exemplary embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1.  A radar system comprising:

    a plurality of receiver modules;
    test circuitry configured to:
    inject test tones into at least a first receiver module and a second receiver module of the plurality of receiver modules; and
    a controller that, to perform a testing process, is configured to:

        cause the test circuitry to inject a first pair of test tones having first test tone frequencies and first test tone magnitudes into each of the first receiver module and the second receiver module;
        receive a first output signal from the first receiver module that is generated in response to the first pair of test tones;
        receive a second output signal from the second receiver module that is generated in response to the first pair of test tones;
        detect interference based on the first pair of test tones, the first output signal, and the second output signal;
        modify, in response to detecting the interference, the first test tone frequencies to produce second test tone frequencies; and
        cause, in response to detecting the interference, the test circuitry to inject a second pair of test tones having the second test tone frequencies into the first receiver module and the second receiver module.

2.  The radar system of claim 1, wherein the first receiver module includes a first low noise amplifier, LNA, the second receiver module includes a second LNA, and test circuitry is configured to inject the test tones at an input of the first LNA and at an input of the second LNA.

3.  The radar system of claim 1 or 2, wherein the first test tone magnitudes include a first magnitude of a first test tone of the first pair of test tones and a second magnitude a second test tone of the first pair of test tones, the first output signal includes a first output tone and a second output tone, the second output signal includes a third output tone and a fourth output tone, and the controller is configured to detect the interference based on the first test tone magnitudes and based on magnitudes of the first output tone, the second output tone, the third output tone, and the fourth output tone.

4.  The radar system of claim 3, wherein the controller, to detect the interference, is configured to:

    perform interference detection for the first receiver module by:

        determining a first ratio of:

            a second ratio of the first magnitude of the first test tone to the second magnitude of the second test tone; and
            a third ratio of the magnitudes of the first output tone and the second output tone; and

        comparing the first ratio to a predetermined threshold range;

    perform interference detection for the second receiver module by:

        determining a fourth ratio of:

            the second ratio of the first magnitude of the first test tone to the second magnitude of the second test tone; and

a fifth ratio of the magnitudes of the third output tone and the fourth output tone; and

comparing the fourth ratio to the predetermined threshold range; and

determine that either of the first ratio or the fourth ratio is outside of the predetermined threshold range.

5. The radar system of any preceding claim, wherein the controller is further configured to:

cause the test circuitry to inject a third pair of test tones having second test tone magnitudes into the first and second receiver modules;

determine that interference at the first and second receiver modules is within a predetermined threshold range based on a third output signal generated by the first receiver module in response to the third pair of test tones and based on a fourth output signal generated by the second receiver module in response to the third pair of test tones; and

in response to determining that interference at the first and second receiver modules is within the predetermined threshold range, cause the test circuitry to inject a fourth pair of test tones having third test tone magnitudes into the first and second receiver modules.

6. The radar system of claim 5, wherein the controller is further configured to:

in response to determining that interference at the first and second receiver modules is within the predetermined threshold range based on output signals generated by the first and second receiver modules in response to the fourth pair of test tones, determine a gain mismatch between the first receiver module and the second receiver module.

7. The radar system of any preceding claim, wherein the testing process is performed once following transmission of a sequence of chirps during each radar cycle of a plurality of radar cycles of the radar system.

8. A method comprising:

performing a testing process for a radar system by:

injecting, by test circuitry of the radar system, a first pair of test tones having first test tone frequencies and first test tone magnitudes into each of a first receiver module and a second receiver module of the radar system;

receiving, by a controller of the radar system, a first output signal from the first receiver module that is generated in response to the first pair of test tones;

receiving, by the controller, a second output signal from the second receiver module that is generated in response to the first pair of test tones;

detecting, by the controller, interference based on the first pair of test tones, the first output signal, and the second output signal;

modifying, by the controller in response to detecting the interference, the first test tone frequencies to produce second test tone frequencies; and

injecting, by the test circuitry in response to the controller detecting the interference, a second pair of test tones having the second test tone frequencies into the first receiver module and the second receiver module.

9. The method of claim 8, wherein injecting the first pair of test tones comprises:

injecting, by the test circuitry, the first pair of test tones into a first low noise amplifier, LNA of the first receiver module; and

injecting, by the test circuitry, the first pair of test tones into a second LNA of the second receiver module.

10. The method of claim 9, wherein the first test tone magnitudes include a first magnitude of a first test tone of the first pair of test tones and a second magnitude a second test tone of the first pair of test tones, the first output signal includes a first output tone and a second output tone, the second output signal includes a third output tone and a fourth output tone, and detecting the interference comprises:

detecting, by the controller, the interference based on the first test tone magnitudes and based on magnitudes of the first output tone, the second output tone, the third output tone, and the fourth output tone.

11. The method of claim 10, wherein detecting the interference further comprises:

performing interference detection for the first receiver module by:

determining, by the controller, a first ratio of:

a second ratio of the first magnitude of the first test tone to the second magnitude of the second test tone; and
a third ratio of the magnitudes of the first output tone and the second output tone; and

comparing, by the controller, the first ratio to a predetermined threshold range;

performing interference detection for the second receiver module by:

determining, by the controller, a fourth ratio of:

the second ratio of the first magnitude of the first test tone to the second magnitude of the second test tone; and
a fifth ratio of the magnitudes of the third output tone and the fourth output tone; and

comparing, by the controller, the fourth ratio to the predetermined threshold range; and

determining, by the controller that either of the first ratio or the fourth ratio is outside of the predetermined threshold range.

12. The method of any of claims 8 to 11, further comprising:

injecting, by the test circuitry, a third pair of test tones having second test tone magnitudes into the first and second receiver modules;
determining, by the controller, that interference at the first and second receiver modules is within a predetermined threshold range based on a third output signal generated by the first receiver module in response to the third pair of test tones and based on a fourth output signal generated by the second receiver module in response to the third pair of test tones; and
injecting, by the test circuitry in response to determining that interference at the first and second receiver modules is within the predetermined threshold range, a fourth pair of test tones having third test tone magnitudes into the first and second receiver modules.

13. The method of claim 12, further comprising:
determining, by the controller in response to determining that interference at the first and second receiver modules is within the predetermined threshold range based on output signals generated by the first and second receiver modules in response to the fourth pair of test tones, a gain mismatch between the first receiver module and the second receiver module.

14. The method of claim 11, further comprising:

transmitting, by the radar system, a sequence of chirps during each radar cycle of a plurality of radar cycles; and
performing the testing process once after transmitting the sequence of chirps in each radar cycle of a plurality of radar cycles.

**FIG. 1**

200

START

CALIBRATION — 202

TRANSMIT CHIRP SEQUENCE AND RECEIVE REFLECTIONS — 204

PERFORM BIST PROCESS(ES) — 206

RADAR FRONT-END RECONFIGURATION / IDLE — 208

# FIG. 2

FIG. 3

400

START

INITIALIZE $i$; INITIALIZE TEST TONE MAGNITUDES AND TEST TONE FREQUENCIES — 402

INJECT TEST TONES — 404

DETERMINE OUTPUT TONE MAGNITUDES — 406

PERFORM INTERFERENCE DETECTION CALCULATIONS — 408

INTERFERENCE DETECTED? — 410

RESET $i$; MODIFY TEST TONE FREQUENCIES — 412   ◀ YES

NO

$i = n$? — 414   NO ▶   INCREMENT $i$ AND MODIFY TEST TONE MAGNITUDES — 416

YES

DETERMINE GAIN MISMATCH — 418

# FIG. 4

Europäisches
Patentamt

European
Patent Office

Office européen
des brevets

# EUROPEAN SEARCH REPORT

**Application Number**

EP 24 30 6485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/152254 A1 (VAUCHER CICERO [NL] ET AL) 31 May 2018 (2018-05-31) | 1-3, 5-10,12, 13 | INV.<br>G01S7/02<br>G01S7/40 |
| A | * paragraphs [0020], [0031] - [0033], [0036], [0037], [0041] - [0044], [0048]; figure 1 *<br>----- | 4,11,14 | G01S13/34<br>G01S13/931 |
| A | US 2019/271764 A1 (ONIC ALEXANDER [AT] ET AL) 5 September 2019 (2019-09-05)<br>* paragraphs [0005] - [0023], [0038] - [0043], [0073] - [0075]; figures 1,4-1,4-2 *<br>----- | 1-14 | |
| A | US 2006/128338 A1 (KERTH DONALD A [US] ET AL) 15 June 2006 (2006-06-15)<br>* paragraphs [0026] - [0341]; figures 1-2 *<br>----- | 1-14 | |

**TECHNICAL FIELDS SEARCHED (IPC)**

G01S

The present search report has been drawn up for all claims

| Place of search | Date of completion of the search | Examiner |
|---|---|---|
| Munich | 21 February 2025 | Metz, Carsten |

EPO FORM 1503 03.82 (P04C01)

## ANNEX TO THE EUROPEAN SEARCH REPORT
## ON EUROPEAN PATENT APPLICATION NO.

EP 24 30 6485

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| US 2018152254 | A1 | 31-05-2018 | CN | 108123759 A | 05-06-2018 |
| | | | EP | 3327961 A1 | 30-05-2018 |
| | | | JP | 7002257 B2 | 04-02-2022 |
| | | | JP | 2018088671 A | 07-06-2018 |
| | | | US | 2018152254 A1 | 31-05-2018 |
| US 2019271764 | A1 | 05-09-2019 | CN | 110221258 A | 10-09-2019 |
| | | | DE | 102018104729 A1 | 05-09-2019 |
| | | | US | 2019271764 A1 | 05-09-2019 |
| | | | US | 2022113375 A1 | 14-04-2022 |
| US 2006128338 | A1 | 15-06-2006 | NONE | | |

EPO FORM P0459

For more details about this annex : see Official Journal of the European Patent Office, No. 12/82